# EUROPÄISCHE PATENTSCHRIFT

(11) **EP 2 232 829 B1**
(45) Veröffentlichungstag und Bekanntmachung des Hinweises auf die Patenterteilung: **03.10.2012**
(21) Anmeldenummer: 08870232.9
(22) Anmeldetag: 15.12.2008
(51) Int. Cl.: H04L 29/12, H04L 12/40

(54) **SELBST INITIALISIERENDE SERIELLE SCHNITTSTELLE, EINE ANLAGE UND EIN VERFAHREN**
SELF-INITIALIZING SERIAL INTERFACE, A SYSTEM, AND A METHOD
INTERFACE SÉRIE À AUTOINITIALISATION, SYSTÈME ET PROCÉDÉ

(30) Priorität: 11.01.2008 DE 102008004180
(43) Veröffentlichungstag der Anmeldung: 29.09.2010
(73) Patentinhaber: SEW-EURODRIVE GmbH & Co. KG, 76646 Bruchsal (DE)
(72) Erfinder: GEISSLER, Michael, 76709 Kronau (DE); KOLLAR, Hans, Jürgen, 76646 Bruchsal (DE)
(86) Internationale Anmeldenummer: PCT/EP2008/010641
(87) Internationale Veröffentlichungsnummer: WO 2009/086882

(56) Entgegenhaltungen:
- EP-A- 1 553 726
- EP-A- 1 653 363
- WO-A-03/061211
- DE-A1- 19 952 883

## Beschreibung

Die Erfindung betrifft eine selbst initialisierende serielle Schnittstelle, eine Anlage und ein Verfahren.

Serielle Schnittstellen zur Datenübertragung zwischen Geräten sind bekannt, insbesondere als über Buskabel verbundene Busteilnehmer. Die Adressenvergabe an die Busteilnehmer erfolgt meist bei Herstellung oder Parametrierung der jeweiligen Busteilnehmer.

Aus der DE 10 2005 056 294 A1 ist bekannt, die Adressvergabe an ein jeweiliges Gerät mittels einer an diesem Gerät ausgeführten Aktion auszulösen.

**Aus der** EP 1 653 363 A1 **ist ein Verfahren zum Konfigurieren eines Netzwerkes bekannt. Dabei sind die CAN-, CAN+, CAN low und CAN high durch jeweilige Netzwerkknoten durchgeschleift. Eine weitere Codier-Leitung ist nicht durchgeschleift vorgesehen.**

**Aus der** EP 1 553 726 A1 i**st ein Bussystem bekannt, bei dem über die Leitungen zum Datenaustausch zusätzlich ein Synchronisationssignal übertragen wird.**

Der Erfindung liegt daher die Aufgabe zugrunde, die Inbetriebnahme einer Anlage zu vereinfachen.

Erfindungsgemäß wird die Aufgabe bei seriellen Schnittstelle nach den in Anspruch 1, bei der Anlage nach den in Anspruch 3 und bei dem Verfahren nach den in Anspruch 12 angegebenen Merkmalen gelöst.

Wichtige Merkmale der Erfindung bei der seriellen Schnittstelle sind, dass sie selbst initialisierend ist und mindestens zwei weitere Leitungen umfasst, wobei die erste der weiteren Leitungen zur sukzessiven Weitergabe eines Spannungssignals nach jeweils erfolgter Adressvergabe an ein oder das nachfolgende Gerät und die zweite der weiteren Leitungen zur Rückmeldung der erfolgten Adressvergabe an das letzte oder erste der Geräte vorgesehen ist.

Von Vorteil ist dabei, dass eine automatische Adressvergabe ermöglicht ist. Denn ein Mastergerät ist in der Lage, den Geräten in serieller Reihenfolge, also nacheinander, jeweils eine Adresse zuzuteilen. Dabei ist durch die sukzessive Weitergabe des Spannungssignals ermöglicht, dass zunächst nur ein Gerät für den Empfang einer Adresse bereit und aktiviert ist. Nach erfolgter Adressvergabe an dieses Gerät ist nun das Spannungssignal von diesem Gerät an dasjenige Gerät weiterübergebbar, das diesem Gerät nachgeordnet ist, wodurch diesem der Empfang einer Adresse ermöglicht ist. Das Verfahren ist danach solange wiederholbar, bis das letzte der in Reihe angeordneten Geräte adressiert ist. Dieses ist dann in der Lage, eine Rückmeldung über die zweite der weiteren Leitungen an das Master-Gerät abzusenden. Auf diese Weise ist also eine automatische Adressvergabe ermöglicht und somit der Aufwand bei der Inbetriebnahme einer Anlage verringerbar, ohne dass bei Herstellung der Geräte schon eine feste Adresse oder eine ähnliche Information zugeteilt und verwaltet werden muss.

Bei einer vorteilhaften Ausgestaltung ist die zweite der weiteren Leitungen als Träger für eine Synchronisationsinformation vorgesehen, insbesondere auf dieser Leitung ein Synchronisationspuls übertragen wird. Von Vorteil ist dabei, dass die zweite der weiteren Leitungen nicht nur als Rückmeldekanal sondern auch als Synchronisationsträger verwendbar ist, also auch im ständigen Betrieb der Anlage.

Wichtige Merkmale der Erfindung bei der Anlage sind, dass das die Geräte verbindende Buskabel erste Leitungen und mindestens zwei weitere Leitungen umfasst, wobei die erste der weiteren Leitungen nach jeweils erfolgter Adressvergabe zur sukzessiven Weitergabe eines Spannungssignals von einem Gerät an ein nächstes Gerät und die zweite der weiteren Leitungen zur Rückmeldung einer erfolgten Adressvergabe an das letzte oder erste der Geräte vorgesehen ist. Von Vorteil ist dabei, dass die Adressvergabe automatisiert erfolgt und eine Rückmeldung nach Adressierung des letzten Gerätes stattfindet, wodurch dann dem Master-Gerät der Abschluss der Adressvergabe mitgeteilt wird.

Bei einer vorteilhaften Ausgestaltung ist jedes Gerät mit dem seriell nachfolgenden Gerät mittels eines jeweiligen Buskabels verbunden. Von Vorteil ist dabei, dass schon beim Verbinden der ersten beiden Geräte eine Adressvergabe ermöglicht ist. Außerdem ist an das jeweils seriell nächste mit Buskabel verbundene Gerät ebenfalls eine Adresse vergebbar.

Bei einer vorteilhaften Ausgestaltung umfasst jedes Gerät ein Eingangssteckverbinderteil, insbesondere Eingangsbuchse, und ein Ausgangssteckverbinderteil, insbesondere Ausgangsbuchse, insbesondere zum Einstecken des jeweiligen Buskabels. Von Vorteil ist dabei, dass ein einfaches und schnelles Verbinden ermöglicht ist. Außerdem sind die Kontakte der Eingangsbuchse und Ausgangsbuchse mit der elektronischen Schaltung im Innern zu verbinden und somit sind nicht alle Leitungen durchgeschleift. Beispielsweise ist die zweite der weiteren Leitungen durchgeschleift und die erste der weiteren Leitungen nicht.

Bei einer vorteilhaften Ausgestaltung ist ein beliebiges Gerät als erstes Master-Gerät und somit jedes weitere Gerät als Slave-Gerät vorgesehen. Von Vorteil ist dabei, dass ein Master-Slave-Bussystem aufbaubar ist und durch das Master-Gerät die Adresse jedem Slave-Gerät eindeutig zuteilbar ist.

Bei einer vorteilhaften Ausgestaltung sind die ersten Leitungen als Datenübertragungsleitungen vorgesehen, insbesondere als RS485 kompatible Schnittstelle.

Bei einer vorteilhaften Ausgestaltung ist die zweite der weiteren Leitungen durch die Geräte durchgeschleift, insbesondere von einem Kontakt der Eingangsbuchse des jeweiligen Geräts zu einem Kontakt der Ausgangsbuchse des jeweiligen Geräts. Von Vorteil ist dabei, dass ein Rückmeldekanal geschaffen wird.

Bei einer vorteilhaften Ausgestaltung sind an einer ersten Seite, insbesondere eingangsseitig, des Master-Geräts die erste und zweite der zweiten Leitungen elektrisch direkt miteinander verbunden. Von Vorteil ist dabei, dass das rückgemeldete Signal an einem Eingang des Mastergeräts anliegt.

Bei einer vorteilhaften Ausgestaltung sind an einer zweiten Seite, insbesondere ausgangsseitig, des letzten Slave-Geräts die erste und zweite der zweiten Leitungen elektrisch über einen ohmschen Widerstand oder einen anderen komplexen Widerstand miteinander verbunden. Von Vorteil ist dabei, dass ein Kurzschiuss verhindert ist.

Bei einer vorteilhaften Ausgestaltung sind die Geräte aus der zweiten der weiteren Leitungen versorgbar, wobei die Versorgung vom jeweiligen seriell vorgeordneten Gerät steuerbar ist. Von Vorteil ist dabei, dass das nachgeordnete Gerät erst dann freigegeben wird, wenn das vorgeordnete Gerät seine Adresse empfangen hat und gegebenenfalls weitere notwendige Verfahrensschritte und/oder Tätigkeiten ausgeführt hat.

Bei einer vorteilhaften Ausgestaltung sind die Geräte selbstversorgend. Von Vorteil ist dabei, dass zur Aktivierung nur ein Spannungssignal weitergegeben werden muss und keine leistungsstarke Stromversorgung über dieses Spannungssignal ausgeführt werden muss. Entsprechend dünn ist die zugehörige Leitung ausführbar.

Wichtige Merkmale bei dem Verfahren zum Betreiben einer Anlage, umfassend Geräte, welche seriell mittels Buskabel verbunden werden, sind, dass
das Buskabel erste und mindestens zwei weitere Leitungen umfasst, wobei die erste der weiteren Leitungen zur sukzessiven Weitergabe eines Spannungssignals nach jeweils erfolgter Adressvergabe an ein nachfolgendes Gerät und die zweite der weiteren Leitungen als Rückmeldung für eine erfolgte Adressvergabe an das letzte oder erste der Geräte verwendet wird.

Anders ausgedrückt, umfasst das Buskabel erste und mindestens zwei weitere Leitungen, über die die erste der weiteren Leitungen von einem jeweiligen Gerät dem dem jeweiligen Gerät nachfolgenden Gerät ein Spannungssignal zuleitbar ist, insbesondere zur Aktivierung und/oder zur Versorgung, insbesondere nach jeweils erfolgter Adressvergabe an ein Gerät und über die zweite der weiteren Leitungen eine Rückmeldung für eine erfolgte Adressvergabe an das letzte oder erste der Geräte oder zumindest an ein dem ersten oder jeweiligen Gerät nachgeordnetes Gerät ausgeführt wird.

Von Vorteil ist dabei, dass eine automatische Adressvergabe ausführbar ist, also eine selbstgesteuerte. Hierbei ist wichtig, dass das vorgeordnete Gerät dem nachgeordneten Gerät das Spannungssignal zuteilt und somit das nachgeordnete erst dann frei gegeben wird, wenn das vorgeordnete Gerät aktiviert wurde und seine Adresse zugeteilt bekommen hat.

Bei einer vorteilhaften Ausgestaltung erfolgt die Weitergabe des Spannungssignals an das seriell nachgeordnete Gerät erst nach Empfang eines entsprechenden Befehls vom Master-Gerät oder einem anderen übergeordneten Rechner. Von Vorteil ist dabei, dass keine Uneindeutigkeiten bei der Adressvergabe entstehen und somit jedem Gerät eine Adresse eineindeutig zuordenbar ist.

Bei einer vorteilhaften Ausgestaltung wird über die ersten Leitungen ein Datenaustausch, insbesondere mit erster Datenübertragungsrate, ausgeführt. Von Vorteil ist dabei, dass eine hohe Datenaustauschrate über die ersten Leitungen erzielbar ist.

Bei einer vorteilhaften Ausgestaltung wird über mindestens eine der weiteren Leitungen ein Datenaustausch, insbesondere mit einer Datenübertragungsrate, die niedriger als die erste Datenübertragungsrate ist, ausgeführt. Von Vorteil ist dabei, dass nach erfolgter Adressvergabe ein zusätzlicher Datenstrom über die weiteren Leitungen oder ein redundanter Datenstrom, wie beispielsweise Sicherheitsbusrückmeldungen oder Prüfbits zum Datenstrom über die ersten Leitungen, über die weiteren Leitungen leitbar ist

Bei einer vorteilhaften Ausgestaltung wird über die erste der weiteren Leitungen ein Synchronisationssignal übertragen, insbesondere zur Synchronisierung einer der Geräte. Von Vorteil ist dabei, dass ein spezieller ungestörter Synchronisierungskanal zur Verfügung steht und somit die erste der weiteren Leitungen auch synchronisierte Abläufe ermöglicht.

Die Geräte sind beispielsweise als Einsteckkarten oder als dezentral in der Anlage oder als zentral im Schaltschrank angeordnete Umrichter vorgesehen, die zur Versorgung von Elektromotoren geeignet ausgeführt sind.

Weitere Vorteile ergeben sich aus den Unteransprüchen.

### Bezugszeichenliste

- 1: Signalposition back
- 2: Signalposition OV5
- 3: Signalposition OV5
- 4: Signalposition CAN_L (RS-)
- 5: Signalposition CAN_H (RS+)
- 6: Signalposition +5V (Vᵢₙ bzw. Vₒᵤₜ)
- 7: Signalposition +5V / B- (Reißleine)
- 8: Signalposition back /B+ (Reißleine)

- 11: Buskabel
- 12: Gerät
- 13: Eingangsbuchse
- 14: Ausgangsbuchse
- 15: Brücke
- R: Widerstand

Die Erfindung wird nun anhand von Abbildungen näher erläutert:

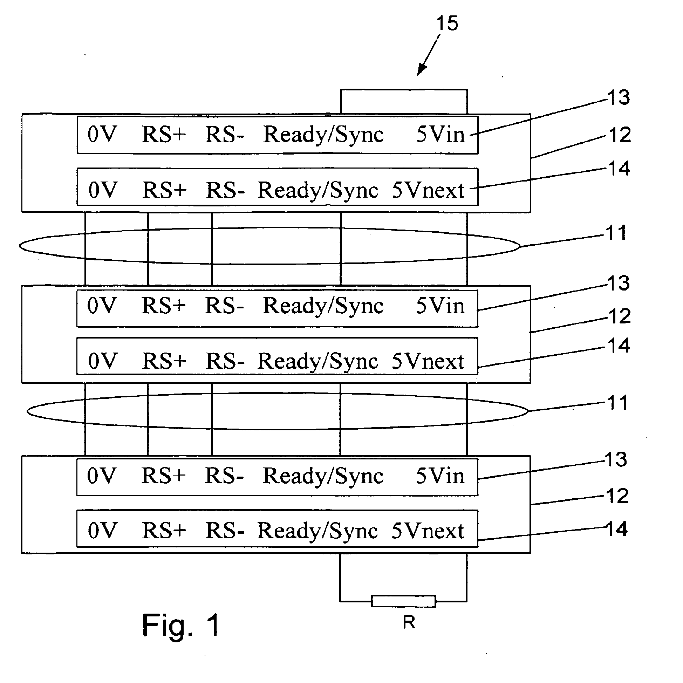

In der Figur 1 ist eine erfindungsgemäße Vorrichtung schematisch skizziert. Dabei sind die Geräte 12 seriell miteinander mittels vom Buskabel 11 umfassten Busleitungen verbunden.

Die Geräte 12 sind als Busteilnehmer ausgeführt und sind somit in der Lage, über die Busleitung Daten miteinander auszutauschen.

Jedes Gerät 12 weist zumindest eine Eingangsbuchse 13 und eine Ausgangsbuchse 14 auf. Ein erstes der Geräte ist als Master und die weiteren Geräte sind als Slave betreibbar. In Figur 1 ist das oberste Gerät 12 als Master vorgesehen. In die Ausgangsbuchse 13 dieses Mastergeräts wird ein mit einem ersten Buskabel 11 verbundener Stecker elektrisch und mechanisch verbunden. Mittels eines am anderen Ende des Buskabels vorgesehenen Steckers wird eine elektrische und mechanische Verbindung mit der Eingangsbuchse des nächstbenachbarten Geräts, einem als Slave betreibbaren Gerät, hergestellt. In entsprechender Weise wird dieses nächstbenachbarte Gerät mit einem weiteren Gerät mittels entsprechendem Buskabel mit Steckern mit den Buchsen eines weiteren Geräts verbunden.

Das Kabel umfasst erste und zweite Leitungen, wobei die ersten Leitungen zum Datenaustausch, insbesondere mit einer hohen Datenübertragungsrate, zwischen den Busteilnehmern vorgesehen sind und die zweiten Leitungen hauptsächlich andere Funktionen erfüllen, die zur automatischen Adressvergabe verwendet werden.

Die ersten Leitungen sind innerhalb der Geräte 12 jeweils von den Kontakten der jeweiligen Eingangsbuchse zu den entsprechenden Kontakten der jeweiligen Ausgangsbuchse durchgeschleift. Somit ist jedes Gerät 12 gleichartig mit den ersten Leitungen verbunden.

Die ersten Leitungen umfassen in Figur 1 eine Leitung für ein Bezugspotential, wobei diese Leitung mit 0V gekennzeichnet ist, und zwei Leitungen (RS+, RS-) zur Übertragung differentieller Signale zum Datenaustausch. Somit sind die ersten Leitungen gemäß der nach Stand der Technik bekannten RS485 Schnittstelle ausgeführt und zwischen den Geräten verlegt.

Die zweiten Leitungen umfassen Leitungen, die mit Ready/Sync, 5Vin und 5Vnext bezeichnet sind. Hierbei ist die Leitung Ready/Sync wiederum durch innerhalb der Geräte von dem entsprechenden Kontakt der Eingangsbuchse zum entsprechenden Kontakt der Ausgangsbuchse durchgeschleift. Die Kontakte 5Vin und 5Vnext sind hingegen nicht durchgeschleift.

Bei Installation der Geräte in der Anlage wird nun das erste Gerät 12, also das Master-Gerät, mit dem nächsten Gerät 12 mittels des Buskabels 11 verbunden. Dabei erzeugt das Master-Gerät ein Spannungssignal, beispielsweise 5V, welches somit an der Leitung 5Vnext anliegt. Diese Leitung wird an den Kontakt 5Vin des mit dem Buskabel verbundenen Geräts verbunden, wodurch von diesem Gerät ein Spannungssignal über die Ready/Sync-Leitung an das Master-Gerät rückmeldbar ist und das Master-Gerät auf diese Weise dem Slave-Gerät eine Adresse eineindeutig zuteilen kann. Der Datenaustausch hierzu findet über die ersten Leitungen statt.

Nach Erhalt der Adresse ist es ermöglicht, dass das Slave-Gerät an seinen Ausgang 5Vnext ein Spannungssignal, beispielsweise 5V, anlegt, welches somit an der Leitung 5Vnext anliegt. Diese Leitung wird an den Kontakt 5Vin des mit dem weiteren Buskabel verbundenen nächsten Slave-Geräts 12 verbunden, wodurch von diesem nächsten Slave-Gerät 12 ein Spannungssignal über die durch das vorangehende Slave-Gerät durchgeschleifte Ready/Sync-Leitung an das Master-Gerät rückmeldbar ist und das Master-Gerät auf diese Weise dem nächsten Slave-Gerät eine Adresse eineindeutig zuteilen kann. Der Datenaustausch hierzu findet über die ersten Leitungen statt. Nach Erhalt der Adresse ist es ermöglicht, dass das nächste Slave-Gerät an seinen Ausgang 5Vnext ebenfalls ein Spannungssignal, beispielsweise 5V, anlegt, welches somit an der Leitung 5Vnext anliegt und somit dasselbe Verfahren für weitere Slave-Gerät fortsetzbar ist.

Beim letzten Slave-Gerät wird der Ausgang 5Vnext mit der durch alle Geräte durchgeschleiften Leitung Ready/Sync über eine Abschlusswiderstand verbunden. Auf diese Weise entsteht kein Kurzschluss, wenn auf der Ready/Sync-Leitung getaktet wird.

Beim Master-Gerät ist der Eingang 5Vin gebrückt mittels der Brücke 15 mit der Ready/Sync-Leitung.

Bei einer anderen erfindungsgemäßen Ausführungsart wird ebenfalls das Master-Gerät mit dem Slave-Gerät mittels Buskabel verbunden und somit die am Ausgang 5Vnext angelegte Signalspannung an den Eingang 5Vin des Slave-Geräts angelegt. Danach wird dem Slave-Gerät, das über die ersten Leitungen mit dem Master-Gerät Daten austauscht, seine Adresse mitgeteilt. Daraufhin legt das Slave-Gerät an seinen Ausgang 5Vnext wiederum ebenfalls eine Signalspannung an, die somit - nach Verbinden mittels Buskabel - an dem Eingang 5Vin des Slave-Geräts anliegt. Danach wird auch diesem nächsten Slave-Gerät, das ebenfalls über die ersten Leitungen mit dem Master-Gerät Daten austauscht, seine Adresse mitgeteilt. Daraufhin legt dieses nächste Slave-Gerät an seinen Ausgang 5Vnext wiederum ebenfalls eine Signalspannung an, die somit - nach Verbinden mittels Buskabel - an dem Eingang 5Vin eines weiteren Slave-Geräts anliegt. Beim letzten Gerät ist der Ausgang 5Vnext über den Widerstand R mit der Ready/Sync-Leitung verbunden und das Mastergerät stellt an seinem Eingang 5Vin wegen der Brücke zwischen der Ready/Sync-Leitung und dem Eingang 5Vin des Master-Geräts fest, dass nun das letzte Gerät seine Adresse zugeteilt bekommen hat und die Anlage somit in Betrieb nehmbar ist.

Die geschilderte Automatische Adressvergabe funktioniert auch, wenn schon zu Beginn alle Buskabel verlegt und verbunden sind. Denn wegen der seriellen Verkabelung wird vom Master-Gerät ausgehend sukzessive jedes Gerät nacheinander aktiviert und ihm eine Adresse vergeben. Es handelt sich also bei der Erfindung um eine selbst initialisierende serielle Schnittstelle

Der Widerstand R ermöglicht in allen Ausführungsbeispielen, dass die Ready/Sync-Leitung während des Betriebs, also nach Abschluss der Adressvergabe, als Übertragungskanal für Synchronisationssignale verwendbar ist. Hierbei weist zumindest eines der Geräte ein Mittel zur Erzeugung eines Synchronisationssignals auf und leitet eine entsprechende Signalspannung auf die Ready/Sync-Leitung.

Bei einem weiteren erfindungsgemäßen Ausführungsbeispiel wird die vom Slave-Gerät am Eingang 5Vin empfangene Spannung erst an den Ausgang 5Vnext weitergegeben, wenn vom Master-Gerät hierzu der Befehl übertragen wird.

Bei einem weiteren erfindungsgemäßen Ausführungsbeispiel ist das Spannungssignal, welches vom vorangestellten Gerät abgegeben wird, als Versorgungsspannung für das Slave-Gerät verwendbar. Die Slave-Geräte müssen also in diesem Fall nicht als selbstversorgende Geräte ausgeführt sein. Bei einer Anlage mit einer großen Anzahl von Geräten ist es vorteilhaft, einige der Gerät selbstversorgend und die restlichen nicht selbstversorgend auszuführen.

Bei einem weiteren erfindungsgemäßen Ausführungsbeispiel sind andere Schnittstellen anstatt der RS485 Schnittstelle verwendet. Dabei beträgt die Anzahl der ersten Leitungen nicht drei sondern weicht hiervon ab.

Bei einem weiteren erfindungsgemäßen Ausführungsbeispiel sind statt der Buchsen andere Steckverbinderteile, wie beispielsweise Stecker, und statt der Stecker andere Steckverbinderteile, wie beispielsweise Buchsen, vorgesehen.

Bei einem weiteren erfindungsgemäßen Ausführungsbeispiel sind die Geräte als Einsteckkarte ausgeführt oder als Schaltschrank-einbaufähige Geräte. Insbesondere ist das Gerät als Umrichter zur Versorgung eines Elektromotors ausgeführt.

Bei einem weiteren erfindungsgemäßen Ausführungsbeispiel sind die Geräte 2 dezentral im Feld, also in einer Anlage verteilt, vorgesehen und ebenfalls als Umrichter zur Versorgung eines Elektromotors ausgeführt. Statt Umrichtern sind auch andere Optionen jeder Art verwendbar, wie beispielsweise Optionskarten.

Bei einem weiteren erfindungsgemäßen Ausführungsbeispiel werden statt 5V nur 3,5 Volt oder 2,5 Volt oder sogar nur 1,5 Volt verwendet. Es sind aber auch andere Spannungswerte erfolgreich verwendbar.

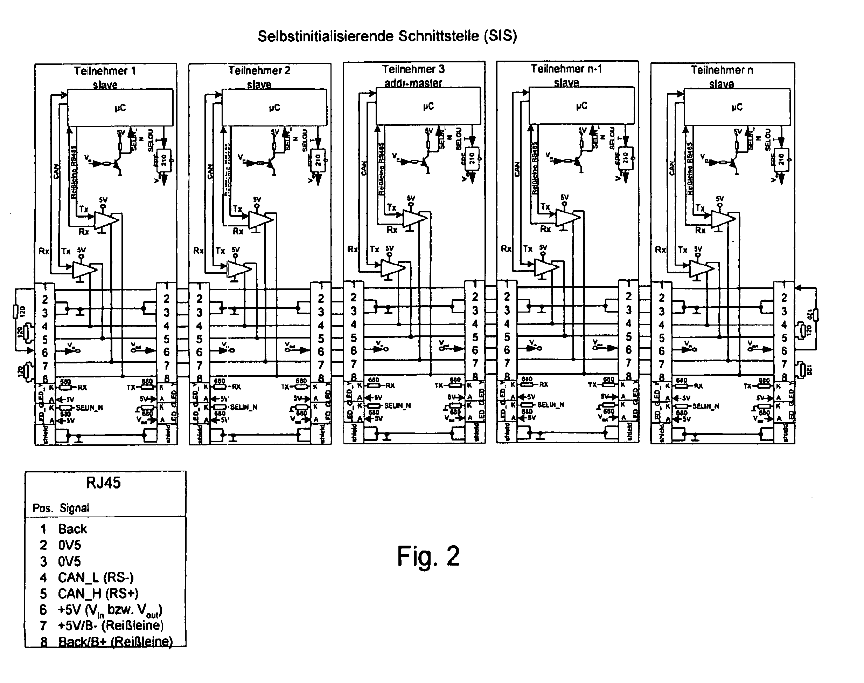

In Figur 2 ist ein weiteres Ausführungsbeispiel mit mehr Details dargestellt:

Die Geräte 12 sind hier nun als Teilnehmer 1 bis n dargestellt, wobei Teilnehmer 3 als Master ausgeführt ist und die anderen Teilnehmer als Slave.

Die 5Vnext der Figur 1 entspricht Vout der Figur 2 und 5Vin der Figur 1 entspricht Vin der Figur 2

Dabei bilden die Signalpositionen (3,4,5) eine erste serielle Schnittstelle zur Datenübertragung. Über die Signalpositionen 1 läuft die Rückmeldung, dass jetzt alle Slaves angeschlossen sind. Ebenso kann dieser Signalpfad nach der Hochlaufphase des Systems als Sync-Signal oder ähnliches verwendet werden.

Signalposition 6 kommt von Signalposition 6 der vorhergehenden Karte. Dieses sechste Signal verläuft lediglich von einer Option zur nächsten und übergibt dabei die 5V an die darauffolgende Option zu dem Zeitpunkt, an dem diese innerhalb der Initialisierungsphase angesprochen werden soll.

Die 5V-Spannung wird vorzugsweise von einer selbstversorgten Karte aus auch für eine direkt verbundene Karte zur Verfügung gestellt. Hierbei muss die entsprechende Strombegrenzung beachtet werden.

An den Anschlussvorrichtungen, die als erster Steckverbinderteil des ersten Teilnehmers ausgebildet sind, wird sowohl Signalposition 4 mit Signalposition 5 mittels eines Widerstandes R als auch Signalposition 7 mit Signalposition 8 mittels eines Abschluss-Widerstandes R überbrückt sowie auch Signalposition 1 mit Signalposition 6 mit einem Widerstand R.

Beim letzten Steckverbinder des letzten Teilnehmers wird das Überbrücken mit Widerständen in analoger Weise ausgeführt. Der Widerstand R zwischen Signalposition 1 des Steckverbinders und Signalposition 6 verhindert einen Kurzschluss, wenn auf diese Leitung im Normalbetrieb getaktet wird.

Signalposition 7 und 8 bilden die zweite serielle Schnittstelle.

Bei weiteren erfindungsgemäßen Ausführungsbeispielen lässt sich auch eine "Reißleine" realisieren, indem die Rückleitung durch Transistoren nach Masse ziehbar ist, wobei der Pegel als Signal von allen angeschlossenen Geräte ausgewertet wird.

Sofern die durch die Signalposition 7 und 8 gebildete zweite serielle Schnittstelle nicht benötigt wird, kann hier ebenfalls eine 5V-Reißleine realisiert werden. Der Abschluss der seriellen Schnittstelle ist wie oben beschrieben durch Verwendung der Widerstände R, insbesondere mit RJ45-Stecker, am ersten und letzten Teilnehmer gewährleistet.

Bei weiteren erfindungsgemäßen Ausführungsbeispielen ist es möglich, bei den einzelnen Teilnehmern mittels open-collector-Anschaltung die back-Leitung, also Signalposition 1, individuell auf Masse zu ziehen. Da jeder Teilnehmer den Zustand dieser Signalleitung überwacht, ist es somit ebenfalls möglich eine "Reißleine" zu realisieren, welches in diesem Falle nicht auf differentieller Datenübertragung beruht.

Während der Initialisierungsphase des Ausführungsbeispiels nach Figur 2 beginnt nach aktvieren der Spannungsversorgung der als Master eingestellte Teilnehmer 3 mit der Weiterleitung der 5Vnext. An den nächsten Teilnehmer wird daraufhin eine Adresse mittels eineindeutiger Identitätsnummer (UUID), wie beispielsweise Seriennummer oder dergleichen, vergeben. Ist dieser Vorgang beendet, muss der soeben angesprochene Teilnehmer die 5Vnext zur nächsten Option weiterleiten, also einschalten, wobei vorher die Antwortfreigabe bei dem gerade erfolgreich im Bus identifizierten Teilnehmer nur für direkte Adressierung an den ersten Teilnehmer gesetzt wird.

Danach wird beim nächsten Teilnehmer ebenso verfahren. Dies wird fortgesetzt bis der letzte Teilnehmer erfolgreich am Bus angemeldet wurde. Zusätzlich wird beim letzten Teilnehmer die Signalposition 7 auf 8, also die 5Vnext auf die Back-Leitung, gebrückt, bis zum ersten Teilnehmer zurückgeführt und hier wieder auf die Signalposition 5Vin gebrückt. Damit wird das 5Vnext-Signal zurück zum Master geführt, wodurch dieser erkennt, dass die Initialisierung aller physikalisch am Bus angeschlossenen Teilnehmer erfolgreich abgeschlossen wurde.

Wenn noch keine Initialisierung durchgeführt oder ein Teilnehmer getauscht wurde, also die eineindeutige Identitätsnummer UUID nicht mit der Adresse übereinstimmt, wird die nächst höhere Adresse im Bus vergeben und alle wichtigen Daten, wie beispielsweise Adresse, UUID, Gerätetyp, maximale Baudrate und dergleichen, gespeichert. Danach wird wie oben beschrieben weiterverfahren.

Nach der Initialisierung werden alle Teilnehmer wieder für allgemeine Adressierung freigeschaitet und die für alle Teilnehmer maximal mögliche Baudrate eingestellt.

Vorzugsweise ist auch ein Betriebs-Modus der Teilnehmer verfügbar, bei dem die Initialisierung des aus allen Teilnehmern zusammengesetzten Systems nur auf Wunsch stattfindet und ansonsten die Endeinstellung auch Starteinstellung ist. Somit ist Zeit einsparbar.

Die Beschaltung integrierter Leuchtmittel, wie LEDs, erfolgt optional sofern sie bei der entsprechenden Buchsenausführung des Steckverbinderteils der RJ45 vorhanden sind. Eine gelbe LED der ankommenden Schnittstelle (hier: links) leuchtet sobald ankommende Daten den Teilnehmer erreichen. Leuchtet eine grüne LED, signalisiert dies, dass die 5V des vorangehenden Teilnehmers an der aktuellen Option anliegen. Im Gegenzug leuchtet eine grüne LED der abgehenden Schnittstelle dann auf, wenn der nächste Teilnehmer angesprochen werden soll und die 5V weitergeleitet werden, beispielsweise als Signal oder als Spannungsversorgung. Die gelbe LED signalisiert ein aktives Senden des Teilnehmers. Somit ist bei Vorhandensein von zweifarbigen LEDs eine entsprechende Diagnosemöglichkeit vor Ort - ohne zusätzliche Hilfsmittel - ermöglicht.

Beim Start der Initialisierungsphase wird gewährleistet, dass, insbesondere vom Adress-Master, also Teilnehmer 3, ausgeführt, alle am Bus anzusprechenden Baugruppen physikalisch vorhanden und mit Spannung versorgt sind.

Sollte sich ein Teilnehmer im "OFF"- Zustand befinden, kann der 5V-Ring über die Signalpositionen 1 und 6 nicht geschlossen werden, wodurch die Initialisierungsphase stets mit einem Fehler beendet wird. Ebenso ist es wichtig alle Teilnehmer gleichzeitig - im Ring hintereinander - zu initialisieren, damit sich die Teilnehmer auch auf die Protokollversion einigen können.

Sollte einmal ein Gerätetausch erfolgen oder ein zusätzliches Gerät in die Busstruktur nachträglich integriert werden, sind zwei Fälle (i) und (ii) ausführbar:

Im ersten Fall (i) ist der nachträglich hinzugekommene Teilnehmer nicht in der Lage, die aktuelle Protokollversion zu verstehen (alter FW-Stand). Daraufhin müssen alle Teilnehmer am Bus spannungslos geschalten und alle gemeinsam wieder eingeschaltet werden, um die Initialisierungsphase erneut durchzuführen, da hier auch die Protokollversion festgelegt wird, wobei sich die jeweils ältere Version durchsetzt.

Im zweiten Fall (ii) ist der Teilnehmer in der Lage die aktuelle Protokollversion zu verstehen und wird über entsprechende Routinen vom adress-master in den Verbund mit aufgenommen, indem er eine entsprechende Busadresse zugeteilt bekommt. Ein Aus- und Wiedereinschalten ist nicht notwendig.

## Patentansprüche

1. Selbst initialisierende serielle Schnittstelle, umfassend eine serielle Schnittstelle, welche Leitungen (OV, RS+, RS-) zur Datenübertragung eines Datenbus aufweist, und mindestens zwei weitere Leitungen, für Geräte (12), die von einem ersten bis zu einem letzten Gerät seriell hintereinander angeordnet sind,
**dadurch gekennzeichnet, dass**
die erste der weiteren Leitungen (5 Vin, 5 Nnext) ausgehend von einem Master-Gerät zur sukzessiven Weitergabe eines Spannungssignals nach jeweils erfolgter Adressvergabe an ein Gerät
und die zweite der weiteren Leitungen (Ready/Sync) zur Rückmeldung der erfolgten Adressvergabe vom letzten an das erste der Geräte vorgesehen ist,
wobei über die zweite der weiteren Leitungen die sukzessive Weitergabe eines Spannungssignals an das erste Gerät nach erfolgter Adressvergabe an ein nachgeordnetes Gerät fortgesetzt wird bis zur Weitergabe an das Master-Gerät,
auch wenn der Master nicht das erste oder letzte Gerät ist.

2. Schnittstelle nach Anspruch 1,
**dadurch gekennzeichnet, dass**
die zweite der weiteren Leitungen als Träger für eine Synchronisationsinformation vorgesehen Ist, Insbesondere auf dieser Leitung ein Synchronisationspuls, ein Synchronsignal oder ein anderes getaktetes Signal übertragen wird.

3. Anlage, umfassend in einer Linie angeordnete Geräte (12), welche seriell mittels Buskabel (11) verbunden sind, wobei
das Buskabel erste als Datenübertragungsleitungen vorgesehene Leitungen (OV, RS+, RS-) und mindestens zwei weitere Leitungen umfasst,
**dadurch gekennzeichnet, dass** die erste der weiteren Leitungen (5Vin, 5Vnext) ausgehend von einem Master-Gerät nach jeweils erfolgter Adressvergabe zur sukzessiven Weitergabe eines Spannungssignals von einem Gerät an das nächste Gerät
und die zweite der weiteren Leitungen (Ready/Sync) zur Rückmeldung der erfolgten Adressvergabe vom letzten an das erste der Geräte vorgesehen ist.
wobei über die zweite der weiteren Leitungen die sukzessive Weitergabe eines Spannungssignals an das erste Gerät nach erfolgter Adressvergabe fortgesetzt wird bis zur Weitergabe an das Master-Gerät,
auch wenn der Master nicht das erste oder letzte Gerät Ist.

4. Anlage nach Anspruch 3,
**dadurch gekennzeichnet, dass**
jedes Gerät mit dem seriell nachfolgenden Gerät mittels eines jeweiligen Buskabels verbunden ist.

5. Anlage nach Anspruch 3 oder 4,
**dadurch gekennzeichnet, dass**
jedes Gerät eine Eingangssteckverbinderteil, insbesondere Eingangsbuchse, und eine Ausgangssteckverbinderteil, insbesondere Ausgangsbuchse, umfasst, insbesondere zum Einstecken des jeweiligen Buskabels.

6. Anlage nach einem der Ansprüche 3 bis 6,
**dadurch gekennzeichnet, dass**
die ersten Leitungen als Datenübertragungsleitungen vorgesehen sind, insbesondere als RS485 kompatible Schnittstelle.

7. Anlage nach einem der Ansprüche 3 bis 6,
**dadurch gekennzeichnet, dass**
die zweite der weiteren Leitungen durch die Geräte durchgeschleift ist, insbesondere von einem Kontakt der Eingangsbuchse des jeweiligen Geräts zu einem Kontakt der Ausgangsbuchse des jeweiligen Geräts..

8. Anlage nach einem der Ansprüche 3 bis 7,
**dadurch gekennzeichnet, dass**
an einer ersten Seite, insbesondere eingangsseitig, des Master-Geräts die erste und zweite der zweiten Leitungen elektrisch direkt miteinander verbunden sind,
und/oder dass
an einer zweiten Seite, insbesondere ausgangsseitig, des letzten Slave-Geräts die erste und zweite der zweiten Leitungen elektrisch über einen ohmschen Widerstand oder einen anderen komplexen Widerstand miteinander verbunden sind.

9. Anlage nach einem der Ansprüche 3 bis 8,
**dadurch gekennzeichnet, dass**
die Geräte aus der zweiten der weiteren Leitungen versorgbar sind, wobei die Versorgung vom jeweiligen seriell vorgeordneten Gerät steuerbar ist,
und/oder dass
die Geräte selbstversorgend sind,
und/oder dass
die Geräte als Einsteckkarten, insbesondere umfassend eine Steuereinrichtung zum Steuern von Antrieben und/oder Elektromotoren, oder als dezentral in der Anlage oder als zentral im Schaltschrank angeordnete Umrichter vorgesehen sind, insbesondere die zur Versorgung von Elektromotoren geeignet ausgeführt sind.

10. Verfahren zum Betreiben einer Anlage, umfassend Geräte (12), welche seriell mittels Buskabel (11) verbunden werden, wobei
das Buskabel erste und mindestens zwei weitere Leitungen umfasst,
**dadurch gekennzeichnet, dass** über die erste der weiteren Leitungen (5Vin, 5Vnext) sukzessive Weitergabe eines Spannungssignals nach jeweils erfolgter Adressvergabe an ein Gerät erfolgt
und über die zweite der weiteren Leitungen (Ready/Sync) Rückmeldung der erfolgten Adressvergabe vom letzten an das erste der Geräte erfolgt ,
wobei über die zweite der weiteren Leitungen die sukzessive Weitergabe eines Spannungssignals an das erste Gerät nach erfolgter Adressvergabe an ein nachgeordnetes Gerät fortgesetzt wird bis zur Weitergabe an das Master-Gerät,
auch wenn der Master nicht das erste oder letzte Gerät ist.

11. Verfahren nach Anspruch 10,
**dadurch gekennzeichnet, dass**
das Buskabel erste und mindestens zwei weitere Leitungen umfasst,
über die die erste der weiteren Leitungen von einem jeweiligen Gerät dem dem jeweiligen Gerät nachfolgenden Gerät ein Spannungssignal zugeleitet wird insbesondere zur Aktivierung und/oder zur Versorgung.

12. Verfahren nach Anspruch 10 oder 11,
**dadurch gekennzeichnet, dass**
die Weitergabe des Spannungssignals an das seriell nachgeordnete Gerät erst nach Empfang eines entsprechenden Befehls vom Master-Gerät oder einem anderen übergeordneten Rechner erfolgt.

13. Verfahren nach einem der Ansprüche 10 bis 12,
**dadurch gekennzeichnet, dass**
über die ersten Leitungen ein Datenaustausch, insbesondere mit erster Datenübertragungsrate, ausgeführt wird,
und/oder dass
über mindestens eine der weiteren Leitungen ein Datenaustausch, insbesondere mit einer Datenübertragungsrate, die niedriger als die erste Datenübertragungsrate ist, ausgeführt wird.

14. Verfahren nach einem der Ansprüche 10 bis 13,
**dadurch gekennzeichnet, dass**
über die erste der weiteren Leitungen ein Synchronisationssignal übertragen wird, insbesondere zur Synchronisierung einer der Geräte.

## Claims

1. Self-initialising serial interface, comprising a serial interface which has lines (0V, RS+, RS-) for data transmission of a data bus, and at least two further lines for devices (12) which are arranged serially one after the other from a first to a last device, **characterised in that**
the first of the further lines (5Vin, 5Vnext) is provided for successively relaying a voltage signal, starting from a master device, after respectively effected address assignment to a device
and the second of the further lines (Ready/Sync) is provided for acknowledging the effected address assignment from the last to the first of the devices,
the successive relaying of a voltage signal to the first device after effected address assignment to a following device being continued up to the relaying to the master device, via the second of the further lines,
even if the master is not the first or last device.

2. Interface according to Claim 1,
**characterised in that**
the second of the further lines is provided as a carrier for synchronising information, in particular on this line a synchronising pulse, a synchronising signal or another clocked signal is transmitted.

3. System, comprising devices (12) arranged in a line and serially connected by means of a bus cable (11),
the bus cable comprising first lines (0V, RS+, RS-), provided as data transmission lines, and at least two further lines,
**characterised in that** the first of the further lines (5Vin, 5Vnext) is provided for successively relaying a voltage signal, starting from a master device, from one device to the next device after respectively effected address assignment
and the second of the further lines (Ready/Sync) is provided for acknowledging the effected address assignment from the last to the first of the devices,
the successive relaying of a voltage signal to the first device after effected address assignment being continued up to the relaying to the master device, via the second of the further lines,
even if the master is not the first or last device.

4. System according to Claim 3,
**characterised in that**
each device is connected to the serially following device by means of a respective bus cable.

5. System according to Claim 3 or 4,
**characterised in that**
each device comprises an input plug-in connector part, in particular an input socket, and an output plug-in connector part, in particular an output socket, in particular for plugging in the respective bus cable.

6. System according to one of Claims 3 to 5,
**characterised in that**
the first lines are provided as data transmission lines, in particular as an RS485-compatible interface.

7. System according to one of Claims 3 to 6,
**characterised in that**
the second of the further lines is looped through the devices, in particular from a contact of the input socket of the respective device to a contact of the output socket of the respective device.

8. System according to one of Claims 3 to 7, **characterised in that**
on a first side, in particular the input side, of the master device, the first and second of the second lines are electrically directly connected to one another,
and/or **in that**
on a second side, in particular the output side, of the last slave device, the first and second of the second lines are electrically connected to one another via an ohmic resistor or another complex resistor.

9. System according to one of Claims 3 to 8,
**characterised in that**
the devices can be supplied from the second of the further lines, the supply being controllable by the respective serially preceding device,
and/or **in that**
the devices are self-supplying,
and/or **in that**
the devices are provided as plug-in cards, in particular comprising a control device for controlling drives and/or electric motors, or as converters arranged decentrally in the system or centrally in the switch cabinet, in particular which are designed to be suitable for supplying electric motors.

10. Method for operating a system, comprising devices (12) which are serially connected by means of a bus cable (11),
the bus cable comprising first and at least two further lines,
**characterised in that** successive relaying of a voltage signal after respectively effected address assignment to a device takes place via the first of the further lines (5Vin, 5Vnext),
and acknowledgement of the effected address assignment from the last to the first of the devices takes place via the second of the further lines (Ready/Sync),
the successive relaying of a voltage signal to the first device after effected address assignment to a following device being continued up to the relaying to the master device, via the second of the further lines,
even if the master is not the first or last device.

11. Method according to Claim 10,
**characterised in that**
the bus cable comprises first and at least two further lines,
via which [sic] the first of the further lines a voltage signal is led from a respective device to the device following the respective device, in particular for activation and/or for supply.

12. Method according to Claim 10 or 11,
**characterised in that**
the relaying of the voltage signal to the serially following device takes place only after reception of a corresponding command from the master device or another higher-level computer.

13. Method according to one of Claims 10 to 12, **characterised in that**
a data exchange, in particular at a first data transmission rate, is carried out via the first lines,
and/or **in that**
a data exchange, in particular at a data transmission rate which is lower than the first data transmission rate, is carried out via at least one of the further lines.

14. Method according to one of Claims 10 to 13,
**characterised in that**
a synchronising signal, in particular for synchronising one of the devices, is transmitted via the first of the further lines.

## Revendications

1. Interface série à autoinitialisation, comprenant une interface série qui présente des lignes (0V, RS+, RS-) pour la transmission de données d'un bus de données et au moins deux autres lignes pour des appareils (12) qui sont disposés en série les uns derrière les autres d'un premier à un dernier appareil,
**caractérisée en ce que**
la première des autres lignes (5Vin, 5Vnext), partant d'un appareil maître, est prévue pour la transmission successive d'un signal de tension, chaque fois après attribution d'une adresse, à un appareil
et la deuxième des autres lignes (Ready/Sync) pour l'information en retour de l'attribution d'adresse du dernier au premier des appareils,
la transmission successive, par la deuxième des autres lignes, d'un signal de tension au premier appareil après attribution d'une adresse à un appareil suivant étant poursuivie jusqu'à la transmission à l'appareil maître,
même si le maître n'est pas le premier ou le dernier appareil.

2. Interface selon la revendication 1,
**caractérisée en ce que**
la deuxième des autres lignes est prévue comme porteuse d'une information de synchronisation, une impulsion de synchronisation, un signal de synchronisation ou un autre signal cadencé étant en particulier transmis(e) sur cette ligne.

3. Installation, comprenant des appareils (12) disposés en ligne qui sont reliés en série au moyen de câbles de bus (11),
le câble de bus comprenant de premières lignes (0V, RS+, RS-) prévues comme lignes de transmission de données et au moins deux autres lignes,
**caractérisée en ce que**
la première des autres lignes (5Vin, 5Vnext), partant d'un appareil maître, est prévue pour la transmission successive d'un signal de tension, chaque fois après attribution d'une adresse, d'un appareil à l'appareil suivant
et la deuxième des autres lignes (Ready/Sync) pour l'information en retour de l'attribution d'adresse du dernier au premier des appareils,
la transmission successive, par la deuxième des autres lignes, d'un signal de tension au premier appareil après attribution d'une adresse étant poursuivie jusqu'à la transmission à l'appareil maître,
même si le maître n'est pas le premier ou le dernier appareil.

4. Installation selon la revendication 3,
**caractérisée en ce que**
chaque appareil est relié à l'appareil suivant en série au moyen d'un câble de bus respectif.

5. Installation selon la revendication 3 ou 4,
**caractérisée en ce que**
chaque appareil comprend un élément connecteur enfichable d'entrée, en particulier une douille d'entrée, et un élément connecteur enfichable de sortie, en particulier une douille de sortie, en particulier pour l'enfichage du câble de bus respectif.

6. Installation selon une des revendications 3 à 5,
**caractérisée en ce que**
les premières lignes sont prévues comme lignes de transmission de données, en particulier comme interface compatible RS485.

7. Installation selon une des revendications 3 à 6,
**caractérisée en ce que**
la deuxième des autres lignes est bouclée à travers les appareils, en particulier d'un contact de la douille d'entrée de l'appareil respectif à un contact de la douille de sortie de l'appareil respectif.

8. Installation selon une des revendications 3 à 7,
**caractérisée en ce que**
la première et la deuxième des autres lignes sont reliées directement entre elles électriquement d'un premier côté, en particulier du côté entrée, de l'appareil maître,
et/ou que
la première et la deuxième des autres lignes sont reliées entre elles électriquement par une résistance ohmique ou une autre résistance complexe d'un deuxième côté, en particulier du côté sortie, du dernier appareil esclave.

9. Installation selon une des revendications 3 à 8,
**caractérisée en ce que**
les appareils peuvent être alimentés à partir de la deuxième des autres lignes, l'alimentation pouvant être commandée par l'appareil respectivement précédent en série,
et/ou que
les appareils disposent d'une alimentation autonome,
et/ou que
les appareils sont prévus sous la forme de cartes enfichables, en particulier comprenant un dispositif de commande pour la commande d'entraînements et/ou de moteurs électriques, ou sous la forme de variateurs de vitesse décentralisés dans l'installation ou centralisés dans l'armoire de commande, en particulier réalisés de manière à permettre l'alimentation de moteurs électriques.

10. Procédé de fonctionnement d'une installation comprenant des appareils (12) qui sont reliés en série au moyen de câbles de bus (11),
le câble de bus comprenant de premières lignes et au moins deux autres lignes, **caractérisé en ce que**
la transmission successive d'un signal de tension, chaque fois après attribution d'une adresse, à un appareil a lieu par la première des autres lignes (5 Vin, 5Vnext),
et l'information en retour de l'attribution d'adresse du dernier au premier des appareils a lieu par la deuxième des autres lignes (Ready/Sync),
la transmission successive, par la deuxième des autres lignes, d'un signal de tension au premier appareil après attribution d'une adresse à un appareil suivant étant poursuivie jusqu'à la transmission à l'appareil maître,
même si le maître n'est pas le premier ou le dernier appareil.

11. Procédé selon la revendication 10,
**caractérisé en ce que**
le câble de bus comprend de premières lignes et au moins deux autres lignes,
un signal de tension est amené par la première des autres lignes d'un appareil respectif à l'appareil qui suit l'appareil respectif, en particulier pour son activation et/ou son alimentation.

12. Procédé selon la revendication 10 ou 11,
**caractérisé en ce que**
la transmission du signal de tension à l'appareil suivant en série a lieu seulement après réception d'un ordre correspondant de l'appareil maître ou d'un autre ordinateur de niveau supérieur.

13. Procédé selon une des revendications 10 à 12,
**caractérisé en ce que**
un échange de données, en particulier à une première vitesse de transmission de données, est effectué par les premières lignes,
et/ou que
un échange de données, en particulier à une vitesse de transmission de données qui est inférieure à la première vitesse de transmission de données, est effectué par au moins une des autres lignes.

14. Procédé selon une des revendications 10 à 13,
**caractérisé en ce que**
un signal de synchronisation, en particulier pour la synchronisation d'un des appareils, est transmis par la première des autres lignes.
